# EUROPÄISCHE PATENTSCHRIFT

(11) **EP 2 986 839 B1**
(45) Veröffentlichungstag und Bekanntmachung des Hinweises auf die Patenterteilung: **10.04.2019**
(21) Anmeldenummer: 14705167.6
(22) Anmeldetag: 18.02.2014
(51) Int. Cl.: F02M 51/06, F02M 61/16, F16K 31/06

(54) **MAGNETVENTIL MIT VERBESSERTEM ÖFFNUNGS- UND SCHLIESSVERHALTEN**
SOLENOID VALVE HAVING IMPROVED OPENING AND CLOSING BEHAVIOUR
ELECTROVANNE À COMPORTEMENT D'OUVERTURE ET FERMETURE AMÉLIORÉ

(30) Priorität: 17.04.2013 DE 102013206958
(43) Veröffentlichungstag der Anmeldung: 24.02.2016
(73) Patentinhaber: Robert Bosch GmbH, 70442 Stuttgart (DE)
(72) Erfinder: KNORPP, Michael, 71287 Weissach (DE); KROMER, Ralf, 71665 Vaihingen (DE)
(86) Internationale Anmeldenummer: PCT/EP2014/053110
(87) Internationale Veröffentlichungsnummer: WO 2014/170049

(56) Entgegenhaltungen:
- WO-A1-2006/010665
- DE-A1- 2 236 586
- DE-A1- 19 808 067
- DE-A1-102008 030 748
- DE-A1-102010 038 437
- US-A1- 2012 199 086

## Beschreibung

### Stand der Technik

Die vorliegende Erfindung betrifft ein Magnetventil zum Steuern von Fluiden, insbesondere von Kraftstoff, mit verbessertem Öffnungsverhalten und gleichzeitig auch verbessertem Schließverhalten.

Magnetventile sind beispielsweise als Einspritzventile aus dem Stand der Technik in unterschiedlichen Ausgestaltungen bekannt. Es hat sich herausgestellt, dass Magneteinspritzventile, welche im Bereich des Ankers im Gehäuse eine unmagnetische Trennung, d.h., einen unmagnetischen Bereich, haben, unter denselben Bedingungen schneller öffnen können als Ventile ohne eine derartige Trennung des Magnetkreises. Allerdings werden durch die Trennung des Magnetkreises die Schließzeiten verschlechtert. Die DE19808067 A1 offenbart ein Magnetventil zum Steuern von Fluiden mit einem magnetischen Steg, der durch einen nichtmagnetischen Werkstoff gestützt wird. Die DE102010038437 A1 offenbart ein Magnetventil mit magnetischen und nichtmagnetischen Stegen im Polkern.

### Offenbarung der Erfindung

Das erfindungsgemäße Magnetventil zum Steuern von Fluiden mit den Merkmalen des Anspruches 1 weist demgegenüber den Vorteil auf, dass sowohl die Öffnungszeiten als auch die Schließzeiten des Magnetventils verbessert werden können und das Magnetventil dabei insbesondere besonders einfach und kostengünstig herstellbar ist. Dadurch ist insbesondere eine Massenfertigung möglich. Dies wird erfindungsgemäß dadurch erreicht, dass das Magnetventil einen Magnetkreis mit einem Anker, einem Innenpol und einem Magnetrückschluss aufweist. Dabei umfasst der Magnetkreis ein unmagnetisches Trennelement zur Unterbrechung des Magnetkreises und wenigstens einen magnetischen Steg, welcher in Axialrichtung des Ventils verläuft und den Magnetkreis am unmagnetischen Trennelement schließt. Der magnetische Steg hat somit die Wirkung eines magnetischen Bypasses, welcher am unmagnetischen Trennelement angeordnet ist.

Die Unteransprüche zeigen bevorzugte Weiterbildungen der Erfindung.

Vorzugsweise ist der magnetische Steg radial innerhalb des unmagnetischen Trennelements angeordnet. Dadurch kann auch an einer Innenfläche des unmagnetischen Trennelements durch Anordnung des magnetischen Steges ein härterer Bereich als das magnetische Trennelement ausgebildet werden.

Besonders bevorzugt ist der magnetische Steg einstückig mit dem magnetischen Trennelement gebildet. Besonders bevorzugt ist das einstückige Bauteil, umfassend den magnetischen Steg und das unmagnetische Trennelement, dabei ein MIM-Bauteil (metal injection moulding-Bauteil). Hierdurch kann der magnetische Steg sehr individuell und einsatzbezogen ausgebildet werden.

Weiter bevorzugt ist der magnetische Steg mit dem Innenpol des Magnetkreises in Kontakt. Besonders bevorzugt ist dabei zwischen dem magnetischen Steg und dem Innenpol eine kraftschlüssige Verbindung, insbesondere eine Klemmverbindung, ausgebildet.

Gemäß einer weiteren bevorzugten Ausgestaltung der vorliegenden Erfindung sind der magnetische Steg, das unmagnetische Trennelement und ein Gehäuseteil, welches Teil des Magnetkreises ist, als einstückiges Bauteil ausgebildet. Besonders bevorzugt ist dieses einstückige Bauteil ein MIM-Bauteil. Weiter bevorzugt ist bei diesem einstückigen Bauteil das Gehäuseteil aus Ferrit, das unmagnetische Trennelement aus Austenit und der magnetische Steg aus Martensit. Besonders bevorzugt ist dabei das Gehäuseteil aus Ferrit stärker magnetisch als der magnetische Steg aus Martensit.

Erfindungsgemäß sind eine Vielzahl von magnetischen Stegen und das unmagnetische Trennelement in Form einer Hülse mit konstantem Innendurchmesser vorgesehen. Alternativ sind erfindungsgemäß die magnetischen Stege und das unmagnetische Trennelement derart ausgebildet, dass diese ebenfalls in Grundform einer Hülse vorgesehen sind, jedoch die magnetischen Stege vom magnetischen Trennelement radial nach innen vorstehen.

Weiter bevorzugt ist für eine möglichst schnelle Schließzeit eine Querschnittsfläche des unmagnetischen Trennelements größer als eine Querschnittsfläche der magnetischen Drosselvorrichtung.

Das erfindungsgemäße Magnetventil ist besonders bevorzugt ein Kraftstoffeinspritzventil, insbesondere zur Direkteinspritzung in einen Brennraum. Vorzugsweise wird Kraftstoff dabei durch den Anker des Ventils hindurchgeführt.

### Kurze Beschreibung der Zeichnung

Nachfolgend werden bevorzugte Ausführungsbeispiele der Erfindung unter Bezugnahme auf die begleitende Zeichnung im Detail beschrieben. In der Zeichnung bezeichnen gleiche bzw. funktional gleiche Teile jeweils gleiche Bauteile. In der Zeichnung ist:
- Figur 1: eine schematische Schnittansicht eines Magnetventils gemäß einem ersten Ausführungsbeispiel der Erfindung,
- Figur 2: eine schematische, perspektivische Teilansicht eines Teils eines Magnetkreises des Magnetventils von Figur 1,
- Figur 3: eine vergrößerte Schnittansicht eines Teilbereichs des Magnetkreises von Figur 1, und
- Figur 4: eine schematische, perspektivische Teilansicht eines Teils eines Magnetkreises gemäß einem zweiten Ausführungsbeispiel.

### Bevorzugte Ausführungsformen der Erfindung

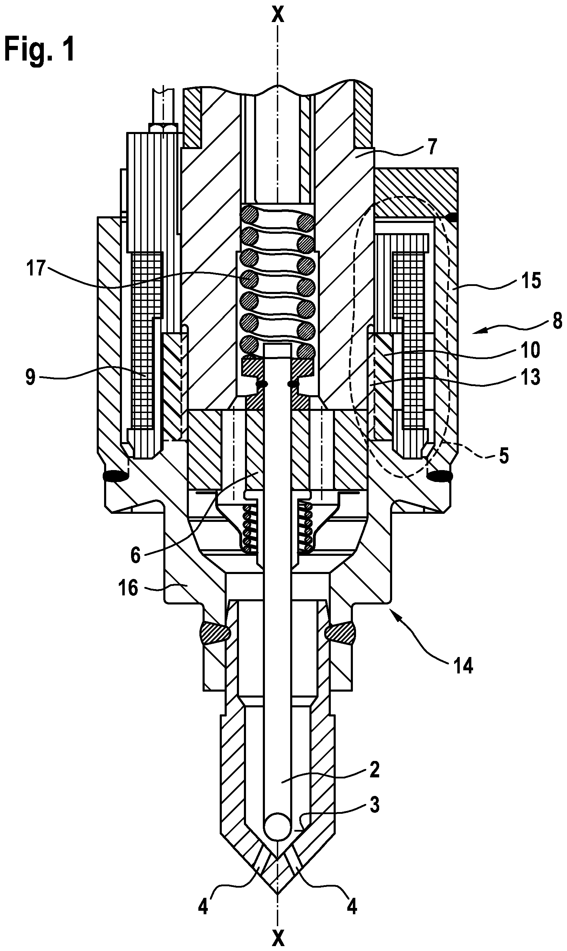

Nachfolgend wird unter Bezugnahme auf die Figuren 1 bis 3 ein Magnetventil 1 zum Steuern eines Fluids gemäß einem ersten Ausführungsbeispiel im Detail beschrieben.

Wie aus Figur 1 ersichtlich ist, umfasst das Magnetventil 1 ein Schließelement 2 in Form einer Ventilnadel mit schließseitiger Kugel, welche Auslassöffnungen 4 an einem Ventilsitz 3 freigibt und verschließt.

Das Magnetventil 1 umfasst ferner einen Magnetkreis 5 mit einem Anker 6, einem Innenpol 7 und einem Magnetrückschluss 8. Der Magnetrückschluss 8 ist in diesem Ausführungsbeispiel ein Teil eines Gehäuses 14 des Magnetventils, wobei das Gehäuse 14 mehrteilig ausgebildet ist. Hierbei sind die beiden Gehäuseteile 15, 16 Teile des Magnetkreises 5.

Das Magnetventil 1 umfasst ferner eine Spule 9, welche bei Bestromung den Anker 6 anzieht. Nach Beendigung einer Bestromung der Spule 9 stellt ein Rückstellelement 17 den Anker 6 wieder in die Ausgangsposition zurück. Figur 1 zeigt dabei den geöffneten Zustand des Magnetventils 1, in welchem der Anker 6 am Innenpol 7 anliegt. Der Anker 6 ist in bekannter Weise mit dem Schließelement 2 verbunden, um die Hubbewegung des Schließelements zu bewirken.

Der Magnetkreis 5 des Magnetventils 1 umfasst ferner ein unmagnetisches Trennelement 10, welches in diesem Ausführungsbeispiel hülsenförmig ist. Das unmagnetische Trennelement 10 ermöglicht eine magnetische Trennung des Magnetkreises und stellt sicher, dass bei Betätigung der Spule zum Öffnen des Ventils der Magnetkreis schnell über den Anker 6 geschlossen wird, so dass eine sehr schnelle Öffnungszeit des Magnetventils erreicht wird. Das unmagnetische Trennelement 10 ist allerdings problematisch hinsichtlich der Schließzeiten des Magnetventils 1, welche sich durch das unmagnetische Trennelement 10 vergrößern.

Daher ist erfindungsgemäß eine Vielzahl von magnetischen Stegen 13 vorgesehen, welche eine Verbindung zwischen dem Gehäuse 14, genauer dem Gehäuseteil 16, und dem Innenpol 7 herstellt. Diese Stege 13 stellen eine magnetische Überbrückung des unmagnetischen Trennelements bereit.

Im ersten Ausführungsbeispiel sind insgesamt vier magnetische Stege 13 ausgebildet, welche an einer Innenseite des unmagnetischen Trennelements 10 angeordnet sind. Die vier Stege 13 sind dabei entlang des Innenumfangs in gleichem Abstand vorgesehen. Eine Breite der Stege 13 in Umfangsrichtung ist dabei gleich wie ein Zwischenraum zwischen zwei benachbarten Stegen 13.

Das unmagnetische Trennelement 10 ist in diesem Ausführungsbeispiel aus Austenit und die Stege 13 sind leicht magnetisch aus Martensit. Dagegen ist das Gehäuseteil 16 aus Ferrit und stärker magnetisch als die Stege 13. Hierbei bilden das Gehäuseteil 16, das unmagnetische Trennelement 10 und die Stege 13 ein einstückiges Bauteil, welches als MIM-Bauteil vorgesehen ist. Die Stege 13 sind dabei derart am hülsenförmigen unmagnetischen Trennelement 10 angeordnet, dass eine zylinderförmige, glatte, zylindrische Innenfläche des Bauteils erreicht wird. Da die Stege 13 aus Martensit hergestellt sind, weisen sie eine größere Härte als eine Härte des unmagnetischen Trennelements 10 auf.

Ferner ist erfindungsgemäß zwischen dem einstückigen Bauteil des Magnetkreises, umfassend das unmagnetische Trennelement 10, die Stege 13 und das Gehäuseteil 16, und dem Innenpol 7 eine Klemmverbindung 21 ausgebildet.

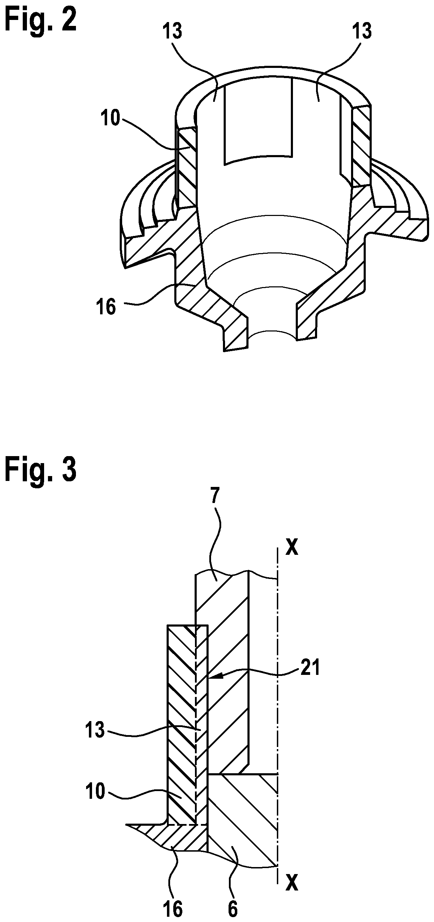

Wie insbesondere aus Figur 3 ersichtlich ist, sind die magnetischen Stege 13 dabei derart vorgesehen, dass ein erster Teilbereich der Stege 13 mit dem Innenpol 7 in Kontakt ist und ein zweiter Teilbereich der Stege 13 mit dem Anker 6 in Kontakt ist. Hierdurch können die Stege 13 zusätzlich noch eine Führungsfunktion für den Anker übernehmen. Somit ist ein Teilbereich der Stege 13 als Führung für den Anker 6 vorgesehen. Da die Stege 13 härter als das Trennelement 10 sind, ergibt sich hierdurch auch ein reduzierter Verschleiß.

Durch das Einbringen der Stege 13 wird ein magnetischer Fluss im Vergleich zu einem vollständig am Innenumfang des Bauteils vorgesehenen Bereich reduziert. Hierdurch sind insbesondere noch schnellere Öffnungszeiten möglich, ohne dass sich dies hierbei negativ auf die Schließzeiten des Ventils auswirkt. Somit bilden die im Vergleich zum unmagnetischen Trennelement 10 härteren magnetischen Stege auch Vorteile bei der Führung des Ankers 6 und beim Einpressen des Innenpols 7 in das Bauteil. Da die Stege 13 nur partiell vorhanden sind, wird der magnetische Fluss im Vergleich mit einem magnetischen Ring am Innenumfang des Bauteils trotzdem signifikant reduziert.

Durch das Vorsehen der in Axialrichtung X-X des Ventils verlaufenden magnetischen Stege 13 wird somit eine magnetische Überbrückung des unmagnetischen Trennelements 10 erreicht. Dies hat die Wirkung, dass sich die Schließzeiten des Magnetventils signifikant verbessern, ohne dass sich dadurch die schnellen Öffnungszeiten des Magnetventils verschlechtern. Ein Querschnitt des unmagnetischen Trennelements 10 ist dabei um ein Vielfaches größer als ein Querschnitt der magnetischen Stege 13.

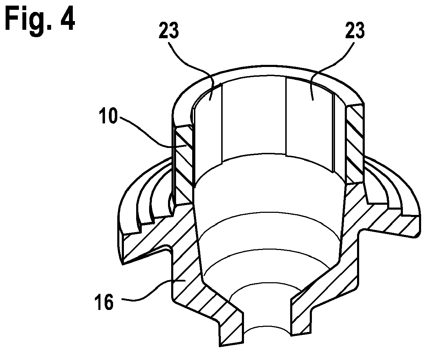

Die Figur 4 zeigt das in Figur 2 gezeigte einteilige Bauteil des Magnetrückschlusses 8, wobei die Stege 23 beim zweiten Ausführungsbeispiel vom unmagnetischen Trennelement 10 radial nach innen vorstehen. Hierdurch sind die Stege 23 des zweiten Ausführungsbeispiels etwas von der Innenfläche des unmagnetischen Trennelements 10 nach innen abgesetzt. Auch dieses einstückige Bauteil wird vorzugsweise mittels MIM-Verfahren hergestellt. Die Stege 23 des zweiten Ausführungsbeispiels stehen vorzugsweise um ca. 0,2 mm vom Innenumfang des unmagnetischen Trennelements 10 nach innen vor. Ein weiterer Vorteil des zweiten Ausführungsbeispiels ist, dass das unmagnetische Trennelement als zylindrische Hülse vorgesehen werden kann, welche beispielsweise auch als Einlegeteil bei MIM-Verfahren vorgesehen werden kann. Hierdurch kann die zylindrische Hülse sehr kostengünstig als geometrisch einfaches Bauteil ausgeführt sein.

## Patentansprüche

1. Magnetventil zum Steuern von Fluiden, umfassend:
- ein Schließelement (2), welches an einem Ventilsitz (3) wenigstens eine Auslassöffnung (4) freigibt und verschließt,
- einen Magnetkreis (5) mit einem Anker (6), einem Innenpol (7) und einem Magnetrückschluss (8), und
- eine Spule (9),
- wobei der Anker (6) mit dem Schließelement (2) zusammenwirkt,
- wobei der Magnetkreis (5) ein unmagnetisches Trennelement (10) zur Unterbrechung des Magnetkreises (5) umfasst, und
- wobei am unmagnetischen Trennelement (10) wenigstens ein in Axialrichtung (X-X) des Ventils verlaufender magnetischer Steg (13; 23) angeordnet ist,
**dadurch gekennzeichnet,**
**dass** eine Vielzahl von magnetischen Stegen (13; 23) und das unmagnetische Trennelement (10) eine Form einer zylindrischen Hülse mit konstantem Innendurchmesser aufweisen oder dass die magnetischen Stege (23) von einem zylindrischen, unmagnetischen Trennelement (10) radial nach innen vorstehen, wobei das unmagnetische Trennelement (10) die Hülse bildet und die magnetischen Stege (13) radial innerhalb des unmagnetischen Trennelements (10) angeordnet sind, und wobei jeweils gilt, dass die magnetischen Stege (13; 23) den Magnetkreis (5) am unmagnetischen Trennelement (10) schließen.

2. Magnetventil nach Anspruch 1, **dadurch gekennzeichnet, dass** die magnetischen Stege (13; 23) einstückig mit dem unmagnetischen Trennelement (10) gebildet sind.

3. Magnetventil nach einem der vorhergehenden Ansprüche, **dadurch gekennzeichnet, dass** die magnetischen Stege (13) mit dem Anker (6) in Kontakt ist und eine Führung für den Anker (6) bildet.

4. Magnetventil nach Anspruch 2 oder 3, **dadurch gekennzeichnet, dass** die magnetischen Stege (13), das unmagnetische Trennelement (10) und ein Gehäuseteil (16), welches Teil des Magnetkreises (5) ist, als einstückiges Bauteil, insbesondere MIM-Bauteil, vorgesehen sind.

5. Magnetventil nach Anspruch 4, **dadurch gekennzeichnet, dass** das Gehäuseteil (16) aus Ferrit, das unmagnetische Trennelement aus Austenit und die magnetischen Stege (13; 23) aus Martensit ist.

6. Magnetventil nach einem der vorhergehenden Ansprüche, **dadurch gekennzeichnet, dass** die magnetischen Stege (13; 23) mit dem Innenpol (7) in Kontakt sind.

7. Magnetventil nach einem der vorhergehenden Ansprüche, **dadurch gekennzeichnet, dass** zwischen den magnetischen Stegen (13; 23) und dem Innenpol (7) eine kraftschlüssige Verbindung, insbesondere eine Klemmverbindung (21), ausgebildet ist.

## Claims

1. Solenoid valve for controlling fluids, comprising:
- a closing element (2) which opens and closes at least one outlet opening (4) on a valve seat (3),
- a magnetic circuit (5) with an armature (6), an inner pole (7) and a magnetic return path (8), and
- a coil (9),
- the armature (6) interacting with the closing element (2),
- the magnetic circuit (5) comprising a non-magnetic separating element (10) for interrupting the magnetic circuit (5), and
- at least one magnetic web (13; 23) which runs in the axial direction (X-X) of the valve being arranged on the non-magnetic separating element (10),
**characterized in that** a multiplicity of magnetic webs (13; 23) and the non-magnetic separating element (10) have a form of a cylindrical sleeve with a constant internal diameter, or **in that** the magnetic webs (23) project radially to the inside from a cylindrical, non-magnetic separating element (10), the non-magnetic separating element (10) forming the sleeve, and the magnetic webs (13) being arranged radially within the non-magnetic separating element (10), and it holding true in each case that the magnetic webs (13; 23) close the magnetic circuit (5) on the non-magnetic separating element (10).

2. Solenoid valve according to Claim 1, **characterized in that** the magnetic webs (13; 23) are formed in one piece with the non-magnetic separating element (10).

3. Solenoid valve according to either of the preceding claims, **characterized in that** the magnetic webs (13) are in contact with the armature (6) and form a guide for the armature (6).

4. Solenoid valve according to Claim 2 or 3, **characterized in that** the magnetic webs (13), the non-magnetic separating element (10) and a housing part (16) which is part of the magnetic circuit (5) are provided as a single-piece component, in particular a MIM component.

5. Solenoid valve according to Claim 4, **characterized in that** the housing part (16) is made from ferrite, the non-magnetic separating element is made from austenite, and the magnetic webs (13; 23) are made from martensite.

6. Solenoid valve according to one of the preceding claims, **characterized in that** the magnetic webs (13; 23) are in contact with the inner pole (7).

7. Solenoid valve according to one of the preceding claims, **characterized in that** a non-positive connection, in particular a clamping connection (21), is configured between the magnetic webs (13; 23) and the inner pole (7) .

## Revendications

1. Électrovanne pour la commande de fluides, comprenant :
- un élément de fermeture (2) qui ouvre et ferme au moins une ouverture de sortie (4) au niveau d'un siège de soupape (3),
- un circuit magnétique (5) avec une armature (6), un pôle intérieur (7) et une culasse magnétique (8), et
- une bobine (9),
- l'armature (6) coopérant avec l'élément de fermeture (2),
- le circuit magnétique (5) comprenant un élément de coupure non magnétique (10) pour couper le circuit magnétique (5), et
- au moins une bande magnétique (13 ; 23) s'étendant dans la direction axiale (X-X) de la soupape étant disposée sur l'élément de coupure non magnétique (10),
**caractérisée**
**en ce qu'**une pluralité de bandes magnétiques (13 ; 23) et l'élément de coupure non magnétique (10) présentent une forme de douille cylindrique avec un diamètre intérieur constant ou **en ce que** les bandes magnétiques (23) font saillie radialement vers l'intérieur depuis un élément de coupure cylindrique non magnétique (10), l'élément de coupure non magnétique (10) formant la douille et les bandes magnétiques (13) étant disposées radialement à l'intérieur de l'élément de coupure non magnétique (10), et les bandes magnétiques (13; 23) fermant à chaque fois le circuit magnétique (5) au niveau de l'élément de coupure non magnétique (10).

2. Électrovanne selon la revendication 1, **caractérisée en ce que** les bandes magnétiques (13; 23) sont formées d'une seule pièce avec l'élément de coupure non magnétique (10).

3. Électrovanne selon l'une quelconque des revendications précédentes, **caractérisée en ce que** les bandes magnétiques (13) sont en contact avec l'armature (6) et forment un guide pour l'armature (6) .

4. Électrovanne selon la revendication 2 ou 3, **caractérisée en ce que** les bandes magnétiques (13), l'élément de coupure non magnétique (10) et une partie de boîtier (16) qui fait partie du circuit magnétique (5) sont prévus sous forme de composant d'une seule pièce, en particulier de composant MIM.

5. Électrovanne selon la revendication 4, **caractérisée en ce que** la partie de boîtier (16) est en ferrite, l'élément de coupure non magnétique est en austénite et les bandes magnétiques (13 ; 23) sont en martensite.

6. Électrovanne selon l'une quelconque des revendications précédentes, **caractérisée en ce que** les bandes magnétiques (13 ; 23) sont en contact avec le pôle intérieur (7).

7. Électrovanne selon l'une quelconque des revendications précédentes, **caractérisée en ce qu'**entre les bandes magnétiques (13 ; 23) et le pôle intérieur (7) est réalisée une connexion par engagement par force, en particulier une connexion par serrage (21).
